# EUROPEAN PATENT SPECIFICATION

(11) **EP 4 604 067 B1**
(45) Date of publication and mention of the grant of the patent: **07.10.2026**
(21) Application number: 25153262.8
(22) Date of filing: 22.01.2025
(51) Int. Cl.: G06T 15/00, G06T 15/04

(54) **METHODS AND DEVICES FOR PERFORMING SHADER OPERATIONS**
VERFAHREN UND VORRICHTUNGEN ZUR DURCHFÜHRUNG VON SHADER-OPERATIONEN
PROCÉDÉS ET DISPOSITIFS POUR EFFECTUER DES OPÉRATIONS DE NUANCEUR

(30) Priority: 15.02.2024 GB 202402117
(43) Date of publication of application: 20.08.2025
(73) Proprietor: Sony Interactive Entertainment Inc., Tokyo 108-0075 (JP)
(72) Inventor: CERRATO, Maurizio, London, W1F 7LP (GB); GREEN, Lawrence Martin, London, W1F 7LP (GB); LEUNG, Jun Yen, London, W1F 7LP (GB)
(74) Representative: Fish & Richardson P.C.

(56) References cited:
- JP-A- 2017 120 594
- LGEHY HOMAN ET AL: "Prefetching in a Texture Cache Architecture", 1 January 1998 (1998-01-01), XP093187375, Retrieved from the Internet <URL:https://www.cs.cmu.edu/afs/cs/academic/class/15869-f11/www/readings/igehy98_texprefetching.pdf>
- ANONYMOUS: "Why is sampling from large textures so slow? - Graphics and GPU Programming - GameDev.net", 18 July 2010 (2010-07-18), XP093187590, Retrieved from the Internet <URL:https://www.gamedev.net/forums/topic/577114-why-is-sampling-from-large-textures-so-slow/>

## Description

### Field of Invention

The present invention relates to methods and devices for performing shader operations.

### Background

The "background" description provided herein is for the purpose of generally presenting the context of the disclosure. Work of the presently named inventors, to the extent it is described in this background section, as well as aspects of the description which may not otherwise qualify as prior art at the time of filing, are neither expressly or impliedly admitted as prior art against the present invention.

As processing speeds and display technologies have improved, users' expectations of rendering quality have likewise increased. This can place a significant burden on content rendering devices, such as games consoles or computers, as these increasing expectations may be difficult to meet despite advances in processing speeds and the like. For instance, more detailed textures may be used to provide a higher-quality appearance - but these may be associated with increased storage requirements and access times. When scaled up over a plurality of textures used in a particular content, such as a video game, this can lead to a significant additional burden upon the processing device.

Such an issue can be more pronounced in the case that a user is using older hardware, as content is often designed for the more recent content so as to make use of the additional processing capabilities. Opportunities for increased efficiency of processing resource usage are therefore considered desirable. Lgehy Homan ET AL: "Prefetching in a Texture Cache Architecture" published in 1998 in SIGGRAPH/Eurographics Workshop on Graphics Hardware discloses prefetching of texels in the context of rendering to reduce latency.

It is therefore considered that it is advantageous to alleviate this additional burden so as to enable higher-quality content to be provided with the available processing hardware.

It is in this context that the present disclosure arises.

### Summary of the Invention

The present invention is defined by the independent claims.

In a first aspect, a method for performing shader operations is provided in claim 1.

In another aspect, a processing device is provided in claim 14.

Further respective aspects and features of the invention are defined in the appended claims.

### Brief Description of the Drawings

Embodiments of the present invention will now be described by way of example with reference to the accompanying drawings, in which:
- Figure 1 schematically illustrates an example entertainment system;
- Figure 2 schematically illustrates an example method; and
- Figure 3 schematically illustrates an example processing device.

### Description of the Embodiments

In the following description, a number of specific details are presented in order to provide a thorough understanding of the embodiments of the present invention. It will be apparent, however, to a person skilled in the art that these specific details need not be employed to practice the present invention. Conversely, specific details known to the person skilled in the art are omitted for the purposes of clarity where appropriate.

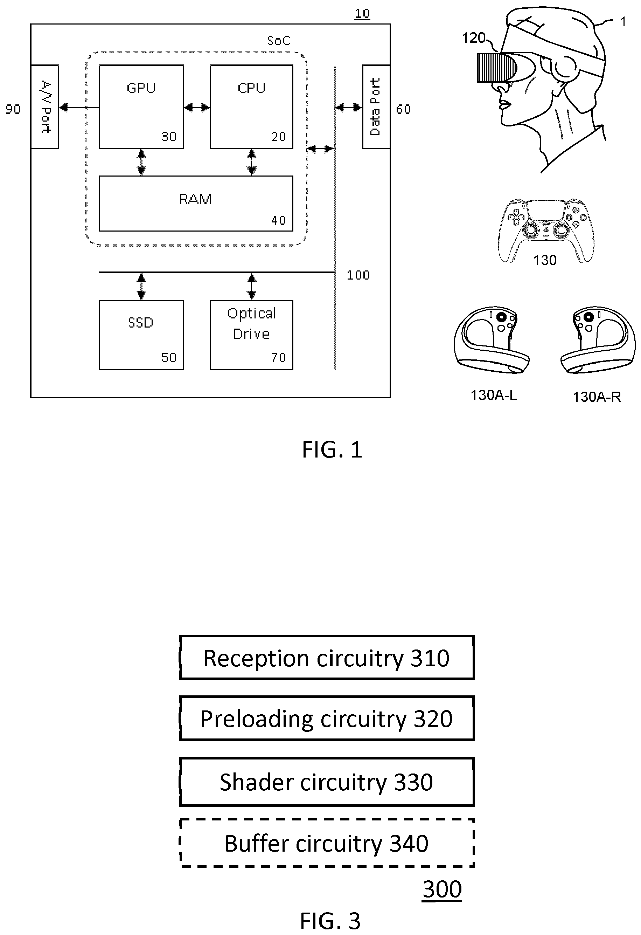

Referring to Figure 1, an example of an entertainment system 10 is a computer or console.

The entertainment system 10 comprises a central processor or CPU 20. The entertainment system also comprises a graphical processing unit or GPU 30, and RAM 40. Two or more of the CPU, GPU, and RAM may be integrated as a system on a chip (SoC).

Further storage may be provided by a disk 50, either as an external or internal hard drive, or as an external solid state drive, or an internal solid state drive.

The entertainment device may transmit or receive data via one or more data ports 60, such as a USB port, Ethernet^{®} port, Wi-Fi^{®} port, Bluetooth^{®} port or similar, as appropriate. It may also optionally receive data via an optical drive 70.

Audio/visual outputs from the entertainment device are typically provided through one or more A/V ports 90 or one or more of the data ports 60.

Where components are not integrated, they may be connected as appropriate either by a dedicated data link or via a bus 100.

An example of a device for displaying images output by the entertainment system is a head mounted display 'HMD' 120, worn by a user 1.

Interaction with the system is typically provided using one or more handheld controllers 130, and/or one or more VR controllers (130A-L,R) in the case of the HMD.

A graphics processing unit (GPU), such as the GPU 30, may comprise RAM, such as RAM 40. In the case of a GPU, the RAM is sometimes referred to as video RAM or VRAM. VRAM is used by the GPU for storing data including image data and texture data to be used in rendering and displaying images.

As processing speeds and display technologies have improved, users' expectations of rendering capabilities have likewise increased. Meanwhile, as rendering capabilities increase, some hardware requirements may not be able to keep up with the increased capabilities, which may result in a bottleneck in rendering capabilities.

GPUs require high bandwidth and low latency in order to perform optimally. Therefore, a GPU may comprise a specialised cache that is known to those skilled in the art as a *texture cache.* A texture cache is used to buffer a texture or texture data to reduce an access latency of texture sampling when performing shader operations.

When one regions of a texture is sampled during a shader operation, the regions of the texture that are spatially close to the accessed region are likely to be sampled in subsequent shader operations. Therefore, when a texture is first sampled, the sampled region of the texture and the regions of the texture that are spatially close to the sampled region are loaded into the texture cache for the shader operations. Therefore, since the spatially close regions are the regions of the texture are the regions of the texture that are likely to be sampled when performing future shader operations, an access latency of texture sampling when performing those future shading operations may be advantageously reduced because these regions of the texture that are likely to be sampled are already loaded into the texture cache.

However, when a region of a texture needs to be sampled for initial fragment shader operations for a given frame, the region of the texture to be sampled will not be in the texture cache since no other spatially close region of the texture will have been sampled for the given frame. This is because the texture cache will not contain any entries for a given frame until after the first request to sample the texture. Therefore, the initial shader operations for a given frame will have the highest latency out of the shader operations that are performed for any given frame.

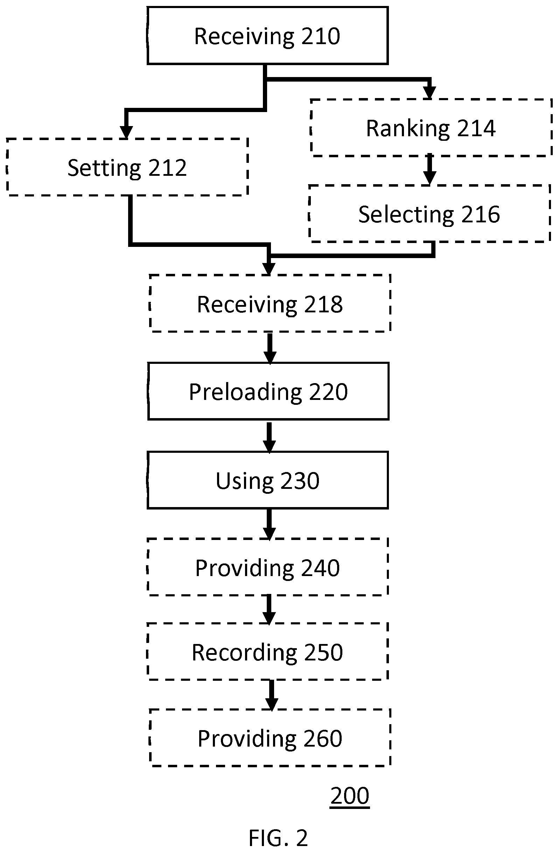

As noted above, GPUs require high bandwidth and low latency in order to perform optimally. Therefore, it is desirable reduce latency for the initial shader operations for a given frame. Accordingly, turning now to figure 2, a method 200 for performing shader operations for a current frame is provided in accordance with embodiments of the present disclosure.

The method 200 comprises a step of receiving 210 data representative of a sampling frequency of a plurality of regions of a texture during fragment shader operations for at least one preceding frame.

The regions of a texture may be individual pixels of a texture. However, it will be appreciated that a region may also be a group of pixels (or texels) of the texture. For example, a region may be a 2x2, 2x4, 4x2, 3x3, 100x300, or any other sized rectangle of pixels. Additionally, the regions are not limited to being rectangular in shape. For example, in some cases, a region may be a group of pixels that fit within a circle of a given radius centred on a particular pixel. It will be appreciated that any other size and/or shape may suitably be selected as a size and/or shape of a region.

A sampling frequency of a respective region of a texture is the number of times the respective region of the texture was sampled during fragment shader operations for a respective frame. For example, if a texture region is sampled 100 times during fragment shader operations for a given frame, the region will have a sampling frequency of 100 for the given frame.

The data representative of the sampling frequency may, for example, be stored in a specific buffer for use with the method 200; otherwise, the data may be stored in association with a texture (for instance, as metadata) which can optionally be loaded into the specific buffer when the texture is first loaded. In some cases, the act of storing the data in the buffer may be considered to be the step of receiving 210. Alternatively, or in addition, accessing or reading the data in the buffer may be considered to be the step of receiving 210.

It will be appreciated that the data representative of the sampling frequency may be a heatmap of the sampling frequency of a plurality of regions of a texture during fragment shader operations for at least one preceding frame.

Optionally, the at least one preceding frame may consist of the frame that immediately precedes the current frame (i.e. the immediately preceding frame). The immediately preceding frame is the frame that finishes rendering as rendering operations for the current frame begins.

Alternatively, the at least one preceding frame (for which data representative of a sampling frequency of a plurality of regions of a texture during fragment shader operations) may comprise a plurality of preceding frames (which may or may not include the immediately preceding frame). The number of preceding frames included in the plurality may, for example, be predetermined by a developer. Although in some cases, the number of preceding frames for which the data representative of the sampling frequency is used for initial shading operations for the current frame may be set dynamically. For example, data representative of the sampling frequency of a given preceding frame may be used/retained until a cache hit rate for the data representative of the sampling frequency of the given preceding frame falls below a predetermined threshold.

It will also be appreciated that, in a case where the at least one preceding frame comprises a plurality of preceding frames, respective ones of those preceding frames may optionally not be temporally adjacent to other respective ones of those preceding frames. As an example, when rendering frames for display at an HMD, frames for display at the left and right display panels of the HMD may be rendered in an alternating manner (e.g. first left frame, first right frame, second left frame, second right frame, etc.).

In this case, the plurality of preceding frames may comprise only every other preceding frame since the left and right HMD frames may be rendered from a different camera perspective. Therefore, there may be a reduced correlation between temporally adjacent left and right HMD frames in comparison to temporally adjacent frames for the same perspective (i.e. left frames only or right frames only). Although it will be appreciated that the term "same perspective" in this context is merely used to highlight the difference between the left/right eye perspectives since the viewpoint (and perspective) may change slightly between temporally adjacent left frames (or between temporally adjacent right frames), for example, in response to a user of the HMD moving their head or otherwise controlling a virtual viewpoint.

It will also be appreciated that, in some cases, the at least one preceding frame may consist of a frame that immediately precedes the immediately preceding frame. For example, in a case where the above-described left/right HMD rendering is performed but only data representative of the sampling frequency for a single preceding frame is used, it may be advantageous to use the most recently rendered frame from the same camera perspective (i.e. the most recent left (right) frame if the current frame is a left (right) frame).

Optionally, two or more sets of data representative of sampling frequency may be stored in the specific buffer for use with the method 200. This may be advantageous in cases where, for example, the at least one preceding frame does not comprise the immediately preceding frame. For example, referring to the above-described HMD example, a first set of data may store data representative of sampling frequency for left frames, and a second set of data may store data representative of sampling frequency for left frames. In this example, the step of receiving 210 may comprise receiving the first set of data if the current frame is a left frame, and receiving the second set of data if the current frame is a right frame. It will be appreciated that it is not necessary to determine if a frame is a left frame or a right frame in order to receive the appropriate set of data, since the set of data to be received may simply alternate between the first set of data and the second set of data each time a new frame is to be rendered.

The method 200 further comprises a step of preloading 220, based on the received data, one or more of the regions of the texture into a texture cache prior to performing initial fragment shader operations for the current frame.

In some cases, the initial fragment shader operations for the current frame may comprise, or be, the first fragment shader operation performed for the current frame by respective texture units.

The inventors of the techniques of the present disclosure have realised that the regions of a texture that are sampled more than other regions of the texture during fragment shader operations for a given frame are the regions of the texture that are more likely to be sampled during fragment shader operations for at least one frame subsequent to the given frame.

Additionally, if the preloaded regions of the texture are not used in the performance of the initial fragment shader operations for the current frame, the preloaded data in the cache may simply be overwritten so there is no negative performance difference in comparison to a case where no preloading is performed. However, when at least one of the regions is used for one of the initial fragment shader operations, an access latency for the initial fragment shader operations for the current frame may be advantageously reduced.

Therefore, because the preloaded regions of the texture are the regions of the texture that are more likely to be sampled during the initial shader operations for the current frame, an access latency for initial fragment shader operations is likely to be reduced for any given frame.

The method 200 also comprises a step of using 230 at least one of the preloaded one or more regions of the texture during the initial fragment shader operations for the current frame.

For example, the step of using 230 may comprise sampling at least a portion of at least one of the preloaded one or more regions during the initial fragment shader operations for the current frame.

In some embodiments of the present disclosure, the one or more preloaded regions of the texture may be the one or more regions of the texture whose sampling frequency is above a threshold sampling frequency. In these embodiments, the step of preloading 220 may comprise preloading 220 one or more of the regions of the texture whose sampling frequency is above a threshold sampling 220 frequency into a texture cache prior to performing initial fragment shader operations for the current frame.

Optionally, in these embodiments of the present disclosure, the threshold sampling frequency may be set at a predetermined level. For example, the predetermined level for the threshold sampling frequency may be set by a software developer via a suitable software instruction or by a designer of the rendering hardware (such as the designer of a GPU).

Alternatively, in these embodiments of the present disclosure, a level of the threshold sampling frequency may be set in dependence upon the number of regions of the texture having a sampling frequency above the threshold sampling frequency to be set is at or below a predetermined number of regions.

Therefore, in these embodiments, the level at which the threshold is set is variable so that the number of regions whose sampling frequencies will be above the threshold (i.e. the number of regions that will be preloaded) is at or below a predetermined number of regions.

Therefore, in some embodiments of the present disclosure, the method 200 further comprises an optional (as indicated by the dotted outline in figure 2) step of setting 212 a level of the threshold sampling frequency in dependence upon the number of regions of the texture having a sampling frequency above the threshold sampling frequency to be set is at or below a predetermined number of regions of the texture.

Of course, it will be appreciated that a threshold sampling frequency is not essential to the presently disclosed techniques. For example, in some embodiments of the present disclosure, the method may optionally (as indicated by the dotted lines in figure 2) include a step of ranking 214 the plurality of regions of the texture in dependence upon the sampling frequency of the plurality of regions.

For example, the regions that have a higher sampling frequency (indicated by the data received in step 210) may be ranked higher than regions of the texture that have a lower sampling frequency. It will be appreciated that a higher sampling frequency of a given region of a texture is representative of the given region of the texture being sampled more often than another region with a lower sampling frequency during fragment shader operations for a given frame.

In these embodiments, the method may further comprise a step of selecting 216, as the one or more regions of the texture for preloading 220, a predetermined number of the plurality of the regions in dependence upon the ranking of the plurality of the regions of the texture.

For example, if the predetermined number of the regions is five regions, the five highest ranked regions may be selected as the one or more regions that are to be preloaded in the preloading step 220.

Optionally, in embodiments of the present disclosure that feature a predetermined number of regions of the texture (i.e. the embodiments that feature the step of setting 212 or the embodiments that feature the steps of ranking 214 and selecting 216), the predetermined number of regions may determined based on the size of the texture cache. For example, the predetermined number of regions may be higher when the texture cache is larger and the predetermined number of regions may be smaller when the texture cache is smaller. Therefore, the predetermined number of regions may be set by a designer of the rendering hardware.

In some cases, a texture unit (which may perform fragment shader operations) may not be aware of when fragment shader operations for a given frame conclude or fragment shader operations for the subsequent frame begin. Additionally, due to the parallelisation of fragment shader operations, some texture units may be performing the final fragment shader operations for one frame whilst other texture units may be performing the initial fragment shader operations for the subsequent frame.

Therefore, in these cases, it may be advantageous to provide a signal that is indicative of the fragment shader operations for the immediately preceding frame concluding. Therefore, in some embodiments of the present disclosure, the method 200 may comprise a step of receiving 218 a signal indicative of the fragment shader operations for the immediately preceding frame concluding.

For example, the signal may be provided via a command buffer that buffers the commands for respective fragment shader operations. The command buffer may, for example, be a FIFO (first in first out) buffer. In this case, the signal may be inserted as a command in the command buffer after the final fragment shader operation command for a given frame. Therefore, after issuing the final fragment shader operation command in the command buffer, the signal may be provided to indicate that the preloading of regions of the texture for the next frame to be rendered should be initiated. Therefore, the signal may be provided (and the preloading initiated) before the final fragment shader operations for the previous frame have concluded (but after those shader operations have been initiated).

In these embodiments of the present disclosure, the step of preloading 220 may be performed in response to receiving the signal.

The method 200 may optionally comprise steps that may assist in reducing an access latency when performing shader operations for at least one subsequent frame.

For example, in some embodiments of the present disclosure, the method may optionally (as indicated by the dotted outline in figure 2) comprise a step of providing 240 a signal for performing shader operations for an immediately subsequent frame. The signal may be indicative of the fragment shading operations for the current frame concluding, as discussed elsewhere herein.

Alternatively, or in addition, in some embodiments of the present disclosure, the method may optionally comprise a step of recording 250 data representative of a sampling frequency of the plurality of regions of the texture during fragment shader operations for the current frame.

For example, a respective region may be associated with a corresponding value for recording data representative of a sampling frequency of the given region. In this example, when a given region of a texture is accessed (or sampled) when performing fragment shader operations for a given frame, a value corresponding to the given region may be incremented to record data representative of a sampling frequency of the given region.

In these embodiments, the method may comprise a step of providing 260 the recorded data for performing shader operations for at least one subsequent frame. The shader operations for the at least one subsequent frame may then be performed according to the method 200 (although the frame that is immediately subsequent to the current frame (i.e. the immediately subsequent frame) will then become the new current frame).

Optionally, the at least one subsequent frame may consist of the immediately subsequent frame. Alternatively, the at least one subsequent frame may comprise a plurality of subsequent frames (which may or may not include the immediately subsequent frame). The number of subsequent frames included in the plurality may be predetermined by a developer for example. Although in some cases, the number of subsequent frames for which the recorded data from a given frame is used may be set dynamically. For example, it may be used for all subsequent frames until a cache hit rate for the recorded data falls below a predetermined threshold.

It will also be appreciated that, in a case where the at least one subsequent frame comprises a plurality of subsequent frames, respective ones of those subsequent frames may not be temporally adjacent to other respective ones of those subsequent frames. As an example, when rendering frames for display at an HMD, frames for display at the left and right display panels of the HMD may be rendered in an alternating manner (i.e. first left frame, first right frame, second left frame, second right frame, etc.). In this case, the plurality of subsequent frames may comprise only every other subsequent frame since the left and right HMD frames may be rendered from a different camera perspective as explained elsewhere herein.

Optionally, in these embodiments, the step of providing 260 may comprise a step of storing the recorded data into a specialised buffer. For example, the recorded data may be stored in a random access buffer, where a respective portion of the buffer corresponds to a respective region of the texture. In this case, when a given region of a texture is accessed (or sampled) when performing fragment shader operations for a given frame, the portion of the buffer corresponding to the given region may be incremented.

In these cases, when performing the shader operations for a subsequent frame according to the method 200 (although the subsequent frame will now be the current frame), the step of receiving 210 may comprise reading the data recorded in the specialised buffer.

Optionally, after the recorded data has been read from the specialised buffer, the specialised buffer may be cleared for recording 250 data representative of a sampling frequency of the plurality of regions of the texture during fragment shader operations for the subsequent frame (which, as noted above, is now the current frame).

However, in some cases, the recorded data may be retained for use with a plurality of subsequent frames. In these cases, the specialised buffer may record data for a plurality of preceding frames as a rolling average.

Alternatively, a relative weighting may be applied to the recorded data for each respective subsequent frame in dependence upon the number of frames that have been rendered since the recorded data for a respective was recorded. For example, the immediately preceding frame may be given a weighting of 1, the frame immediately preceding the immediately preceding frame may be given a weighting of 0.5, and frame immediately preceding that frame may be given a weighting of 0.25, etc. The sampling frequencies in the recorded data for a given frame may be multiplied by its relative weighting before being summed with the corresponding sampling frequencies (that are also multiplied by their respective weightings) of the other frames in the recorded data.

The above example illustrates an example where the weighting decays exponentially by halving the weighted sampling frequency of a given frame for each additional frame between when the given frame was rendered and the current frame. It will be appreciated that any other exponential decay may be used for the relative weighting applied to the recorded data for each respective subsequent frame in dependence upon the number of frames that have been rendered since the recorded data for a respective was recorded may be. It will also be appreciated that any other decay may also be used such a linear or polynomial decay.

However, it should be noted that using an exponential decay for the relative weighting may be particularly advantageous since it may simplify the acquisition of the data for the receiving 210 step. In particular, the weighted sampling frequency for a given region may be stored as a single value for all of the preceding frames for which data is stored (i.e. the sum of the respective weighted sampling frequencies). When a frame finishes rendering, this single stored value for the given may be halved (in a case where the weighting decays exponentially by halving the weighted sampling frequency of a given frame for each additional frame between when the given frame was rendered and the current frame) and the sampling frequency for given region for the frame that has just finished rendering may be added to this now halved value to generate the new weighted sampling frequency for the given region for use in shader operations for a frame rendered after the frame that has just finished rendering.

Turning now to figure 3, in embodiments of the present disclosure, a processing device 300 for performing shader operations for a current frame is provided. The processing device 300 comprises: reception circuity 310 configured to receive data representative of a sampling frequency of a plurality of regions of a texture during fragment shader operations for at least one preceding frame; preloading circuitry 320 configured to preload, based on the received data, one or more of the regions of the texture into a texture cache prior to performing initial fragment shader operations for the current frame; and shader circuitry 330 configured to use at least one of the preloaded one or more regions of the texture during the initial fragment shader operations for the current frame.

Optionally (as indicated by the dotted outline in figure 3), in some embodiments of the present disclosure, the processing device 300 may comprise buffer circuitry 340 configured to record data representative of a sampling frequency of the plurality of regions of the texture during fragment shader operations for the current frame.

Modifications to the processing device 300 corresponding to the modifications described elsewhere herein will be apparent to the skilled person. Additionally, modifications involving implementing the processes in parallel on a GPU or equivalent processor with parallel processing capability so that the use of the preloaded regions of a texture during initial fragment shader operations can be conducted in parallel to speed up the overall generation of the image.

It will be appreciated that the above methods may be carried out on conventional hardware suitably adapted as applicable by software instruction or by the inclusion or substitution of dedicated hardware.

Thus the required adaptation to existing parts of a conventional equivalent device may be implemented in the form of a computer program product comprising processor implementable instructions stored on a non-transitory machine-readable medium such as a floppy disk, optical disk, hard disk, solid state disk, PROM, RAM, flash memory or any combination of these or other storage media, or realised in hardware as an ASIC (application specific integrated circuit) or an FPGA (field programmable gate array) or other configurable circuit suitable to use in adapting the conventional equivalent device. Separately, such a computer program may be transmitted via data signals on a network such as an Ethernet, a wireless network, the Internet, or any combination of these or other networks.

Accordingly, in a summary embodiment of the present description, the processing device 300 may be implemented on, for example, a server (not shown) or entertainment device 10.

Instances of this summary embodiments implementing the methods and techniques described herein (for example by use of suitable software instruction) are envisaged within the scope of the application.

The foregoing discussion discloses and describes merely exemplary embodiments of the present invention. As will be understood by those skilled in the art, the present invention may be embodied in other specific forms without departing from the scope of the appended independent claims.

## Claims

1. A method for performing shader operations for a current frame, the method comprising the steps of:
receiving (210) data representative of a sampling frequency of a plurality of regions of a texture, the sampling frequency indicating a number of times the respective region of a texture was sampled during fragment shader operations for at least one preceding frame;
preloading (220), based on the received data, one or more of the regions of the texture into a texture cache prior to performing initial fragment shader operations for the current frame; and
using at least one of the preloaded one or more regions of the texture during the initial fragment shader operations for the current frame.

2. The method according to any one of the preceding claims, in which the initial fragment shader operations for the current frame comprise the first fragment shader operation performed for the current frame by respective texture units.

3. The method according to any one of the preceding claims, in which the one or more preloaded regions of the texture are the one or more regions of the texture whose sampling frequency is above a threshold sampling frequency.

4. The method according to claim 3, in which the threshold sampling frequency is set at a predetermined level.

5. The method according to claim 3, the method comprising the step of setting (212) a level of the threshold sampling frequency in dependence upon the number of regions of the texture having a sampling frequency above the threshold sampling frequency to be set is at or below a predetermined number of regions.

6. The method according to any one of claims 1 and 2, the method comprising the steps of:
ranking (214) the plurality of regions of the texture in dependence upon the sampling frequency of the plurality of regions; and
selecting (216), as the one or more regions of the texture for preloading, a predetermined number of the plurality of the regions in dependence upon the ranking of the plurality of the regions of the texture.

7. The method according to any one of claims 5 or 6, in which the predetermined number of regions is based on the size of the texture cache.

8. The method according to any one of the preceding claims, the method comprising the step of receiving (218) a signal indicative of the fragment shader operations for the immediately preceding frame concluding, in which the step of preloading is performed in response to receiving the signal.

9. The method according to any one of the preceding claims, the method comprising the step of providing (240) a signal for performing shader operations for an immediately subsequent frame, the signal is indicative of the fragment shading operations for the current frame concluding.

10. The method according to any one of the preceding claims, the method comprising the steps of:
recording (250) data representative of a sampling frequency of the plurality of regions of the texture during fragment shader operations for the current frame; and
providing (260) the recorded data for performing shader operations for at least one subsequent frame.

11. The method according to claim 10, in which the step of providing comprises a step of storing the recorded data into a specialised buffer.

12. Computer software which, when executed by a computer, causes the computer to carry out the method of any one of the preceding claims.

13. A non-transitory machine-readable storage medium which stores computer software according to claim 12.

14. A processing device (300) for performing shader operations for a current frame, the processing device comprising:
reception circuity (310) configured to receive data representative of a sampling frequency of a plurality of regions of a texture, the sampling frequency indicating a number of times the respective region of a texture was sampled during fragment shader operations for at least one preceding frame;
preloading circuitry (320) configured to preload, based on the received data, one or more of the regions of the texture into a texture cache prior to performing initial fragment shader operations for the current frame; and
shader circuitry (330) configured to use at least one of the preloaded one or more regions of the texture during the initial fragment shader operations for the current frame.

15. The processing device according to claim 14, the processing device comprising buffer circuitry (340) configured to record data representative of a sampling frequency of the plurality of regions of the texture during fragment shader operations for the current frame.

## Patentansprüche

1. Verfahren zum Durchführen von Shader-Vorgängen für einen aktuellen Frame, das Verfahren umfassend die Schritte:
Empfangen (210) von Daten, die eine Abtastfrequenz einer Vielzahl von Bereichen einer Textur darstellen, wobei die Abtastfrequenz eine Anzahl von Malen angibt, die der jeweilige Bereich einer Textur während Fragment-Shader-Vorgängen für mindestens einen vorhergehenden Frame abgetastet wird;
Vorladen (220), basierend auf den empfangenen Daten, eines oder mehrerer der Bereiche der Textur in einen Textur-Cache vor dem Durchführen anfänglicher Fragment-Shader-Vorgänge für den aktuellen Frame; und
Verwenden mindestens eines der vorgeladenen einen oder mehreren Bereiche der Textur während der anfänglichen Fragment-Shader-Vorgänge für den aktuellen Frame.

2. Verfahren nach einem der vorstehenden Ansprüche, wobei die anfänglichen Fragment-Shader-Vorgänge für den aktuellen Frame den ersten Fragment-Shader-Vorgang umfassen, der für den aktuellen Frame durch jeweilige Textureinheiten durchgeführt wird.

3. Verfahren nach einem der vorstehenden Ansprüche, wobei der eine oder die mehreren vorgeladenen Bereiche der Textur der eine oder die mehreren Bereiche der Textur sind, deren Abtastfrequenz über einer Schwellenabtastfrequenz liegt.

4. Verfahren nach Anspruch 3, wobei die Schwellenabtastfrequenz auf ein vorbestimmtes Niveau eingestellt ist.

5. Verfahren nach Anspruch 3, das Verfahren umfassend den Schritt des Einstellens (212) eines Niveaus der Schwellenabtastfrequenz in Abhängigkeit davon, dass die Anzahl von Bereichen der Textur, die eine Abtastfrequenz über der einzustellenden Schwellenabtastfrequenz aufweisen, auf oder unter einer vorbestimmten Anzahl von Bereichen liegt.

6. Verfahren nach einem der Ansprüche 1 und 2, das Verfahren umfassend die Schritte:
Einstufen (214) der Vielzahl von Bereichen der Textur in Abhängigkeit von der Abtastfrequenz der Vielzahl von Bereichen; und
Auswählen (216), als den einen oder die mehreren Bereiche der Textur zum Vorladen, einer vorbestimmten Anzahl der Vielzahl der Bereiche in Abhängigkeit von der Einstufung der Vielzahl der Bereiche der Textur.

7. Verfahren nach einem der Ansprüche 5 oder 6, wobei die vorbestimmte Anzahl von Bereichen auf der Größe des Textur-Cache basiert.

8. Verfahren nach einem der vorstehenden Ansprüche, das Verfahren umfassend den Schritt des Empfangens (218) eines Signals, das ein Abschließen der Fragment-Shader-Vorgänge für den unmittelbar vorhergehenden Frame angibt, wobei der Schritt des Vorladens als Reaktion auf das Empfangen des Signals durchgeführt wird.

9. Verfahren nach einem der vorstehenden Ansprüche, das Verfahren umfassend den Schritt eines Bereitstellens (240) eines Signals zum Durchführen von Shader-Vorgängen für einen unmittelbar nachfolgenden Frame, wobei das Signal das Abschließen der Fragment-Shading-Vorgänge für den aktuellen Frame angibt.

10. Verfahren nach einem der vorstehenden Ansprüche, das Verfahren umfassend die Schritte:
Aufzeichnen (250) von Daten, die eine Abtastfrequenz der Vielzahl von Bereichen der Textur während Fragment-Shader-Vorgängen für den aktuellen Frame darstellen; und
Bereitstellen (260) der aufgezeichneten Daten zum Durchführen von Shader-Vorgängen für mindestens einen nachfolgenden Frame.

11. Verfahren nach Anspruch 10, wobei der Schritt des Bereitstellens einen Schritt eines Speicherns der aufgezeichneten Daten in einen spezialisierten Puffer umfasst.

12. Computersoftware, die, wenn sie durch einen Computer ausgeführt wird, den Computer veranlasst, das Verfahren nach einem der vorstehenden Ansprüche vorzunehmen.

13. Nichtflüchtiges maschinenlesbares Speichermedium, das Computersoftware nach Anspruch 12 speichert.

14. Verarbeitungsvorrichtung (300) zum Durchführen von Shader-Vorgängen für einen aktuellen Frame, die Verarbeitungsvorrichtung umfassend:
eine Empfangsschaltung (310), die konfiguriert ist, um Daten zu empfangen, die eine Abtastfrequenz einer Vielzahl von Bereichen einer Textur darstellen, wobei die Abtastfrequenz eine Anzahl von Malen angibt, die der jeweilige Bereich einer Textur während Fragment-Shader-Vorgängen für mindestens einen vorhergehenden Frame abgetastet wurde;
eine Vorladeschaltung (320), die konfiguriert ist, um, basierend auf den empfangenen Daten, einen oder mehrere der Bereiche der Textur vor dem Durchführen anfänglicher Fragment-Shader-Vorgänge für den aktuellen Frame in einen Textur-Cache vorzuladen; und
eine Shader-Schaltung (330), die konfiguriert ist, um mindestens einen der vorgeladenen einen oder mehreren Bereiche der Textur während der anfänglichen Fragment-Shader-Vorgänge für den aktuellen Frame zu verwenden.

15. Verarbeitungsvorrichtung nach Anspruch 14, die Verarbeitungsvorrichtung umfassend eine Pufferschaltung (340), die konfiguriert ist, um Daten aufzuzeichnen, die eine Abtastfrequenz der Vielzahl von Bereichen der Textur während Fragment-Shader-Vorgängen für den aktuellen Frame darstellen.

## Revendications

1. Procédé permettant d'effectuer des opérations de nuanceur pour une trame actuelle, le procédé comprenant les étapes consistant à :
recevoir (210) des données représentant une fréquence d'échantillonnage d'une pluralité de régions d'une texture, la fréquence d'échantillonnage indiquant un nombre de fois où la région respective d'une texture a été échantillonnée au cours d'opérations de nuanceur de fragment pour au moins une trame précédente ;
précharger (220), sur la base des données reçues, une ou plusieurs des régions de la texture dans un cache de texture avant d'effectuer des opérations de nuanceur de fragment initiales pour la trame actuelle ; et
utiliser au moins l'une parmi la ou les régions préchargées de la texture pendant les opérations de nuanceur de fragment initiales pour la trame actuelle.

2. Procédé selon l'une quelconque des revendications précédentes, dans lequel les opérations de nuanceur de fragment initiales pour la trame actuelle comprennent la première opération de nuanceur de fragment effectuée pour la trame actuelle par des unités de texture respectives.

3. Procédé selon l'une quelconque des revendications précédentes, dans lequel la ou les régions préchargées de la texture sont la ou les régions de la texture dont la fréquence d'échantillonnage est supérieure à une fréquence d'échantillonnage seuil.

4. Procédé selon la revendication 3, dans lequel la fréquence d'échantillonnage seuil est réglée à un niveau prédéterminé.

5. Procédé selon la revendication 3, le procédé comprenant l'étape consistant à régler (212) un niveau de la fréquence d'échantillonnage seuil en fonction du fait que le nombre de régions de la texture ayant une fréquence d'échantillonnage supérieure à la fréquence d'échantillonnage seuil à régler est égal ou inférieur à un nombre de régions prédéterminé.

6. Procédé selon l'une quelconque des revendications 1 et 2, le procédé comprenant les étapes consistant à :
classer (214) la pluralité de régions de la texture en fonction de la fréquence d'échantillonnage de la pluralité de régions ; et
sélectionner (216), en tant que la ou les régions de la texture pour le préchargement, un nombre prédéterminé de la pluralité de régions en fonction du classement de la pluralité des régions de la texture.

7. Procédé selon l'une quelconque des revendications 5 ou 6, dans lequel le nombre de régions prédéterminé est basé sur la taille du cache de texture.

8. Procédé selon l'une quelconque des revendications précédentes, le procédé comprenant l'étape consistant à recevoir (218) un signal indiquant la fin des opérations de nuanceur de fragment pour la trame immédiatement précédente, dans lequel l'étape de préchargement est effectuée en réponse à la réception du signal.

9. Procédé selon l'une quelconque des revendications précédentes, le procédé comprenant l'étape consistant à fournir (240) un signal pour effectuer des opérations de nuanceur pour une trame immédiatement suivante, le signal indiquant la fin des opérations de nuanceur de fragment pour la trame actuelle.

10. Procédé selon l'une quelconque des revendications précédentes, le procédé comprenant les étapes consistant à :
enregistrer (250) des données représentant une fréquence d'échantillonnage de la pluralité de régions de la texture au cours d'opérations de nuanceur de fragment pour la trame actuelle ; et
fournir (260) les données enregistrées pour effectuer des opérations de nuanceur pour au moins une trame suivante.

11. Procédé selon la revendication 10, dans lequel l'étape de fourniture comprend une étape consistant à stocker les données enregistrées dans une mémoire tampon spécialisée.

12. Logiciel informatique qui, lorsqu'il est exécuté par un ordinateur, amène l'ordinateur à mettre en œuvre le procédé selon l'une quelconque des revendications précédentes.

13. Support de stockage non transitoire lisible par machine qui stocke un logiciel informatique selon la revendication 12.

14. Dispositif de traitement (300) permettant d'effectuer des opérations de nuanceur pour une trame actuelle, le dispositif de traitement comprenant :
une circuiterie de réception (310) configurée pour recevoir des données représentant une fréquence d'échantillonnage d'une pluralité de régions d'une texture, la fréquence d'échantillonnage indiquant un nombre de fois où la région respective d'une texture a été échantillonnée au cours d'opérations de nuanceur de fragment pour au moins une trame précédente ;
une circuiterie de préchargement (320) configurée pour précharger, sur la base des données reçues, une ou plusieurs des régions de la texture dans un cache de texture avant d'effectuer des opérations de nuanceur de fragment initiales pour la trame actuelle ; et
une circuiterie de nuanceur (330) configurée pour utiliser au moins l'une parmi la ou les régions préchargées de la texture au cours des opérations de nuanceur de fragment initiales pour la trame actuelle.

15. Dispositif de traitement selon la revendication 14, le dispositif de traitement comprenant une circuiterie tampon (340) configurée pour enregistrer des données représentant une fréquence d'échantillonnage de la pluralité de régions de la texture au cours d'opérations de nuanceur de fragment pour la trame actuelle.
